# EUROPÄISCHE PATENTSCHRIFT

(11) **EP 0 434 920 B1**
(45) Veröffentlichungstag und Bekanntmachung des Hinweises auf die Patenterteilung: **26.05.1993**
(21) Anmeldenummer: 90119889.5
(22) Anmeldetag: 17.10.1990
(51) Int. Cl.: B65D 5/02, B65D 5/40, B65D 5/74

(54) **Behälter für Flüssigkeiten und Schüttgüter in Form einer im wesentlichen quaderförmigen Faltschachtel aus Karton, insbesondere aus Kartonkunststoffmehrschichtverbundmaterial**
Container for liquids and granular materials in an essentially parallelepipedal formed folded box made from cardboard, especially multi-layer composite cardboard-plastic material
Récipient pour liquides et matières granuleuses sous forme de boîte pliante essentiellement parallèlépipédique en carton, particulièrement en matériau composite carton plastique multicouches

(30) Priorität: 21.12.1989 DE 3942319
(43) Veröffentlichungstag der Anmeldung: 03.07.1991
(73) Patentinhaber: PKL Verpackungssysteme GmbH, 40476 Düsseldorf (DE)
(72) Erfinder: Färber, Jürgen, W-4044 Kaarst (DE)
(74) Vertreter: Cohausz & Florack Patentanwälte

(56) Entgegenhaltungen:
- EP-A- 0 223 094
- GB-A- 2 205 805
- US-A- 2 321 314
- US-A- 2 643 815
- US-A- 3 944 130

## Beschreibung

Die Erfindung bezieht sich auf einen Behälter für Flüssigkeiten und Schüttgüter in Form einer im wesentlichen quaderförmigen Faltschachtel aus Karton, insbesondere einem Kartonkunststoffmehrschichtverbundmaterial, mit einem unter Bildung von geschlossenen dreieckigen Falttaschen im Querschnitt verjüngten Kopfteil, der die Form eines Trichters mit einer zentralen Öffnung hat, die mit einem ringförmigen Formteil bestückt ist.

Bei einem solchen Behälter umgreift der ringförmige Formteil den oberen Rand der zentralen Öffnung beidseitig und dient als Verstärkung des Randes und als Adapter für einen aufsteckbaren Deckelverschluß. Im verjüngten Kopfteil sind jeweils zwei dreieckige Falttaschen einer jeden bis in den Kopfteil des Behälters reichenden Faltlinie der vier parallelen Behälterkanten zugeordnet. Diese Falttaschen liegen außen auf dem Kopfteil, so daß sich innen eine im wesentlichen stufenlose Rundung der zentralen Öffnung ergibt. Ein solcher Behälter ist wegen des schalenförmig ausgebildeten Deckels nicht dafür ausgelegt und bestimmt, nach Entnahme einer kleinen Menge des Inhaltes wieder verschlossen zu werden (US-A-2 321 313).

Flüssigkeiten für den Gebrauch im Haushalt und im Gewerbe, die nur in kleinen Mengen verbraucht werden, werden heutzutage fast ausschließlich in Behältern aus Kunststoff mit verschließbaren Ausgießern abgefüllt. Da die Entsorgung von Kunststoffprodukten problematisch ist, werden seit langem Kunststoffbehälter für andere Produkte, die nicht in kleinen Mengen, sondern in einem Zuge verbraucht werden, wie Getränke, durch Behälter in Form von Faltschachteln aus einem heißsiegelfähigen Kartonkunststoffmehrschichtverbundmaterial ersetzt. Soweit solche Vorschläge auch für die erwähnten anderen Produkte gemacht wurden, haben sie bis heute in der Praxis keine Bedeutung erlangt. Dies ist auf die Schwierigkeit zurückzuführen, die Behälter mit Ausgießern praxistauglich zu bestücken.

Bei einem bekannten Behälter der eingangs genannten Art ist der Kopfteil in Form eines Giebeldaches gestaltet, wobei der Ausgießer entweder von innen oder von außen mit einem Flansch an einer Giebeldachseite angesiegelt ist (EP 0 224 539 A1, DE 30 39 299 A1, DE 38 32 412 A1). Nachteilig bei solchen Behältern ist, daß sie sich wegen der Lage des Ausgießers auf einer Giebeldachseite und damit nicht an der tiefsten Stelle des auf den Kopf gestellten Behälters nicht vollständig entleeren lassen.

Dagegen ist eine vollständige Entleerung eines anderen Behälters aus einem Kartonkunststoffmehrschichtverbundmaterial möglich. Bei diesem Behälter ist der Kopfteil trichterförmig ausgebildet und umfaßt einen in den trichterförmigen Teil eingesetzten Ausgießer. Der trichterförmige Kopfteil wird von mehreren ausgeschnittenen Dreieckfeldern des Kartonzuschnittes gebildet, deren benachbarte Ränder über Siegelnähte miteinander verbunden sind (EP 0 223 094 A2). Bei diesem Behälter ist von Nachteil, daß der trichterförmige Kopfteil wegen der ausgeschnitten Dreieckfelder nicht abfallfrei zu fertigen ist.

Der Erfindung liegt die Aufgabe zugrunde, einen Behälter für Flüssigkeiten und Schüttgüter in Form einer Faltschachtel der eingangs genannten Art für die Bestückung mit einem Ausgießer zu schaffen, der sich nicht nur leicht herstellen läßt, sondern auch dem Ausgießer eine gute Verdrehsicherung gibt.

Diese Aufgabe wird erfindungsgemäß daduch gelöst, daß die bis in den Kopfteil des Behälters reichenden Faltlinien der vier parallelen Behälterkanten die im Behälter innenliegenden Falten, der jeweils nur an einer Seite dieser Falten anliegenden dreieckigen Falttaschen bilden, wobei die Faltlinien für die außenliegenden Falten der dreieckigen Falttaschen paarweise in einem Feld des Kopfteils liegen und die beiden Felder mit diesen Faltlinien sich im Kopfteil des Behälters gegenüberliegen, und daß das Formteil ein Ausgießer mit einem angeformten Flansch oder ein Adapter mit einem angeformten Flansch ist, der von innen an dem trichterförmigen Kopfteil angebracht ist, wobei seine Form der Innenseite des Kopfteils mit den Falttaschen angepaßt ist.

Nicht nur wegen der trichterförmigen Ausbildung des Kopfteils, sondern vor allem wegen des mit einem angeformten Flansch von innen an dem trichterförmigen Kopfteil angebrachten Ausgießers beziehungsweise Adapters hat der Kopfteil eine hohe Steifigkeit. Aufgrund der angepaßten Form des Flansches an die innenliegenden Falttaschen ergibt sich ein Formschluß, der verbunden mit den anderen Befestigungsmitteln dem Adapter beziehungsweise dem Ausgießer eine gute Verdrehsicherung gibt. Die dafür herangezogenen vier innenliegenden Falttaschen auf gegenüberliegenden Feldern des Kopfteils erlauben ein Falten auf ebenen Flächen, was herstellungstechnisch einfacher ist als eine Formgebung auf einem konischen Dorn. Die bei der Herstellung des schlauchförmigen Korpus aus dem rechteckigen Zuschnitt entstehende Seitennaht kann in an sich bekannter Weise durch einen Abdeckstreifen abgedeckt oder durch die eingeschlagene innere Zuschnittkante geschützt sein.

Die Steifigkeit des Kopfteils und die Befestigung des Ausgießers beziehungsweise Adapters an dem Kopfteil können nach einer Ausgestaltung der Erfindung weiter dadurch verbessert werden, daß der Ausgießer beziehungsweise Adapter mit einem angeformten Flansch von innen an dem trichterförmigen Kopfteil angebracht ist, wobei seine Form der Innenseite des Kopfteils mit den Falttaschen angepaßt ist. Aufgrund der angepaßten Form, insbesondere an die Falttaschen, ergibt sich zusätzlich zu der Halterung durch die anderen Befestigungsmittel ein Formschluß.

Vorzugsweise ist der Ausgießer beziehungsweise Adapter an das Material des Kartons angesiegelt. Dabei ist weiter von Vorteil, wenn der Flansch eine umlaufende Dichtlippe aufweist, die aus heißsiegelfähigem Material bestehen kann, was den dichten Anschluß des Ausgießers an den Karton begünstigt. Zur Verbesserung der Optik kann der obere Rand der Öffnung des Kopfteils durch einen auf den Ausgießer beziehungsweise Adapter sitzenden Blendring abgedeckt sein.

Um die Formgebung des Kopfteils zu erleichtern, ist nach einer weiteren Ausgestaltung der Erfindung vorgesehen, daß von demselben Ursprungsort der drei Faltlinien einer jeden dreieckigen Falttasche jeweils eine weitere Faltlinie ausgeht, die bei geschlossener Falttasche parallel neben der mittleren Faltlinie liegt.

Bei einem mit quadratischem Querschnitt ausgebildeten Behälter erhält man einen weitgehend symmetrischen Kopfteil mit kleiner Öffnung, wenn die von den strahlenförmig verlaufenden Faltlinien eingeschlossenen Winkel gleich groß sind, wobei die von benachbarten Faltlinien für die Seitenkanten ausgehenden benachbarten Faltlinien mindestens in der Nähe des Randes der Öffnung aufeinandertreffen.

Um die Gefahr des Spleißens der bei der Fertigung des Behälters aus dem rechteckigen Zuschnitt entstandenen Seitennaht beim Falten des trichterförmigen Kopfteils zu minimieren, ist nach einer weiteren Ausgestaltung der Erfindung vorgesehen, daß die Seitennaht am Rand der Öffnung außerhalb der Faltlinien liegt, die beim Falten des Kopfteils um mehr als 90° gefaltet werden, insbesondere sollte sie außerhalb der Falttaschen liegen.

Gegenstand der Erfindung ist ferner ein Verfahren zur Herstellung eines erfindungsgemäßen Behälters, das durch folgende Verfahrensschritte gekennzeichnet ist:
1) An einem im Querschnitt rechteckigen, schlauchförmigen Korpus aus Karton werden an einem Ende die Bereiche von zwei gegenüberliegenden Seiten giebeldachförmig unter Bildung von je zwei dreieckigen Falttaschen an jedem Giebel zusammengefaltet.
2) Die Falttaschen werden auf die beiden Giebeldachseiten umgefaltet und daran angeheftet.
3) Ein Ausgießer oder Adapter für einen Ausgießer wird vom Innern des Korpus in den von den Giebeldachseiten und den Giebeln gebildeten, trichterförmigen Oberteil eingeführt, teilweise durch diese Öffnung gesteckt und an dessen Innenseite angesiegelt.
4) Der Korpus wird an seinem dem Ausgießer abgewandten Ende durch einen über- oder eingesiegelten Deckel oder durch eine Stegnahtsiegelung mit anschließender Umfaltung der dabei gebildeten Ohren auf den Boden verschlossen.

Gegenstand der Erfindung ist ferner eine Vorrichtung zur Durchführung des Verfahrens. Sie ist gekennzeichnet durch ein Unterwerkzeug aus einem feststehenden Formdorn und zwei gegenüber dem Formdorn axial beweglichen, an gegenüberliegenden Außenseiten des Formdorns angeordneten Giebelplatten sowie einen gegenüber dem Formdorn axial beweglichen und im Formdorn angeordneten Stempel für einen Ausgießer und durch mehrere Oberwerkzeuge in Form von Faltwerkzeugen für die Giebeldachfaltung und die Falttaschen und in Form von Aktivierungs- und Siegelelementen für die Siegelung der Falttaschen und des Ausgießers.

Im folgenden wird die Erfindung anhand einer Zeichnung näher erläutert. Im einzelnen zeigen
- Figur 1: einen Behälter in perspektivischer Darstellung,
- Figur 2: den Behälter gemäß Figur 1 in Aufsicht,
- Figur 3: den Boden des Behälter gemäß Figur 1 in perspektivischer Darstellung,
- Figur 4: einen Zuschnitt für den Behälter gemäß Figur 1 mit quadratischem Querschnitt,
- Figur 5: einen Korpus aus dem Zuschnitt gemäß Figur 4 mit an einer Seitenkante des Korpus verlaufender Seitennaht vor Einsetzen eines Ausgießers und Verschließen des Bodens aus der Sicht des Bodens,
- Figur 6: den Korpus gemäß Figur 5 mit eingesetztem Ausgießer im Querschnitt durch den Ausgießer in einer zur Figur 5 vergrößerten Darstellung,
- Figur 7: einen Zuschnitt für einen Behälter mit quadratischem Querschnitt in einer zur Figur 1 abgewandelten Ausführung,
- Figur 8: einen Korpus aus dem Zuschnitt gemäß Figur 7 mit in der Mitte eines Seitenwandfeldes des Korpus verlaufender Seitennaht vor Einsetzen eines Ausgießers und Verschließen des Bodens aus der Sicht des Bodens,
- Figur 9: den eingesiegelten Boden des Behälters aus dem Zuschnitt gemäß Figur 6 in perspektivischer Darstellung,
- Figur 10: einen Zuschnitt für einen Behälter mit rechteckigem Querschnitt,
- Figur 11: einen Korpus aus dem Zuschnitt gemäß Figur 10 mit zwischen den Seitenkanten verlaufender Seitennaht vor Einsetzen eines Ausgießers und Verschließen des Bodens aus der Sicht des Bodens,
- Figur 12: den Kopfteil des Behälters gemäß Figur 1 mit Ausgießer im Axialschnitt,
- Figur 13: einen Schraubverschluß für den Ausgießer gemäß Figur 12 im Axialschnitt,
- Figur 14: den Kopfteil des Behälters gemäß Figur 1 mit Ausgießer und aufgesetztem Schraubverschluß gemäß Figur 12 und 13 im Axialschnitt,
- Figur 15: den Kopfteil eines Behälters entsprechend Figur 1 mit einem als Streuer ausgebildeten, durch eine Kappe verschlossenen Ausgießer im Axialschnitt,
- Figur 16 bis 19a: den Kopfteil des Behälters gemäß Figur 1 in verschiedenen Fertigungsphasen jeweils in Aufsicht und im Axialschnitt nach der Linie A-A der Figur 16,
- Figur 20: ein Formwerkzeug für die Herstellung eines Behälters gemäß Figur 1 in Seitenansicht,
- Figur 21: das Formwerkzeug gemäß Figur 20 in Aufsicht,
- Figur 22: das Formwerkzeug gemäß Figur 20 im Axialschnitt nach der Linie B-B der Figur 21,
- Figur 23: die einzelnen Phasen bei der Fertigung des Korpus und dem Einsetzen des Ausgießers unter Einsatz des Formwerkzeuges gemäß Figur 20 - 22 sowie von Falt- und Aktivierungselementen.

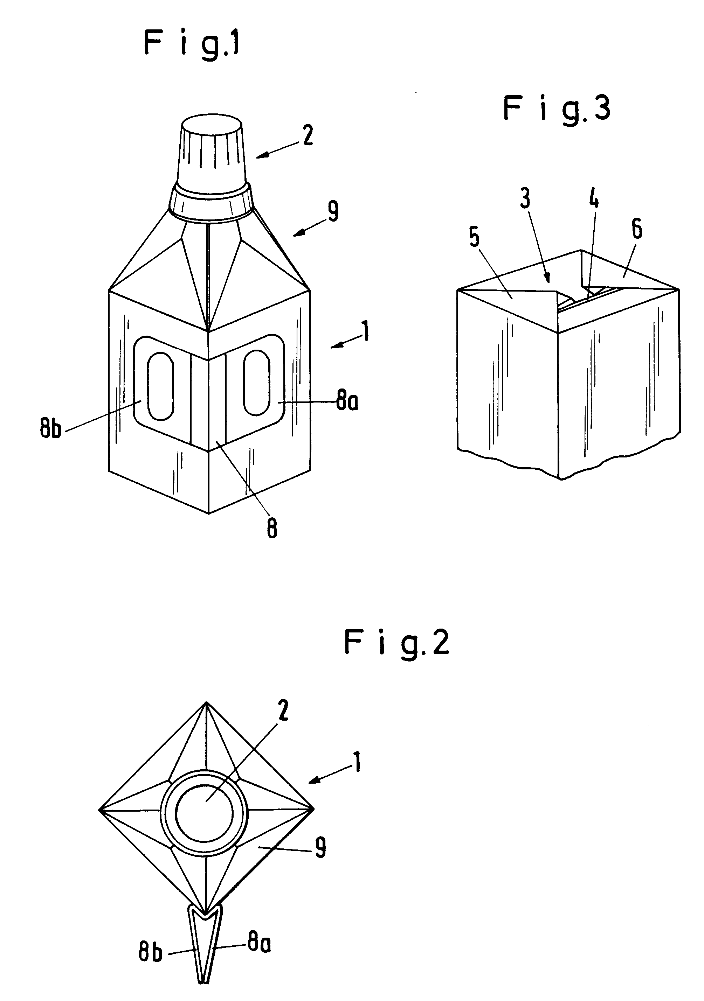

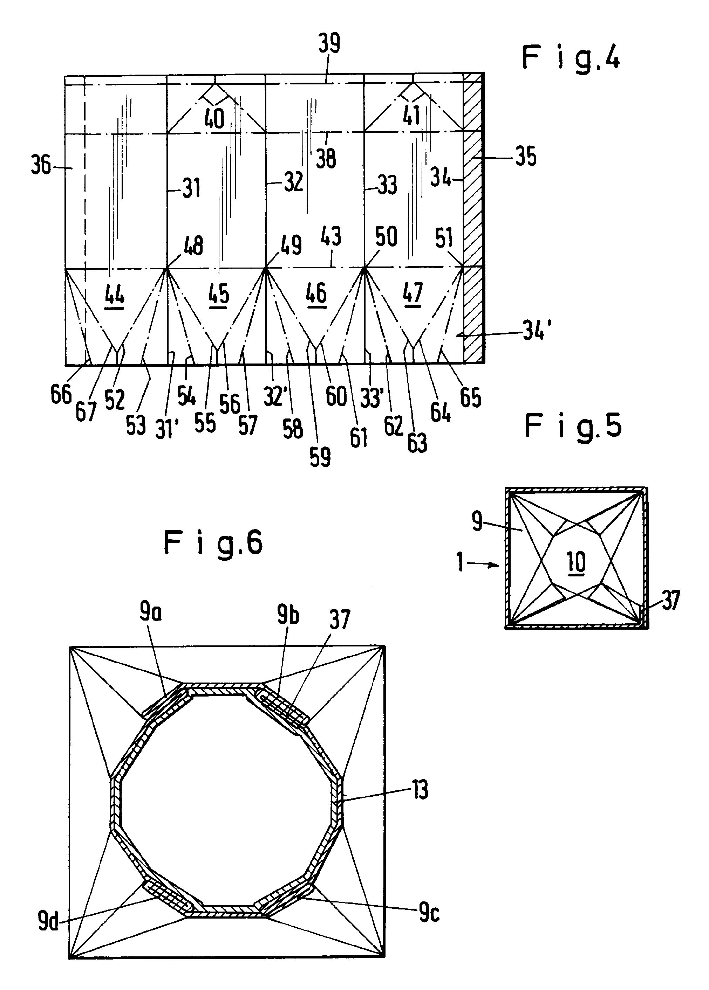

Der in Figur 1 bis 3 dargestellte Behälter besteht aus einem Korpus 1 und einen durch eine aufschraubbare oder aufsteckbare Kappe verschlossenen Ausgießer 2. Der Korpus 1 ist als Faltschachtel ausgeführt und aus einem rechteckigen, abfallfreien Zuschnitt gemäß Figur 4 gefertigt. Als Material für den Zuschnitt findet vorzugsweise Kartonkunststoffmehrschichtverbundmaterial mit oder ohne Aluminiumeinlage Verwendung, das heißsiegelfähig ist. Der Boden 3 des Behälters ist in an sich bekannter Weise über eine Stegnaht 4 verschlossen. Die dabei entstehenden Ohren 5,6 sind nach innen auf den Boden umgefaltet und angesiegelt, wie in Figur 3 dargestellt ist. An einer Seitenkante des Korpus 1 ist eine Lasche 8 mit Grifflappen 8a,8b angesiegelt. Für Transportzwecke liegen die Grifflappen 8a,8b flach an den Seitenwänden des Korpus 1 an, wie in Figur 1 dargestellt ist, während sie für den Gebrauch auffaltbar sind, wie in Figur 2 dargestellt ist.

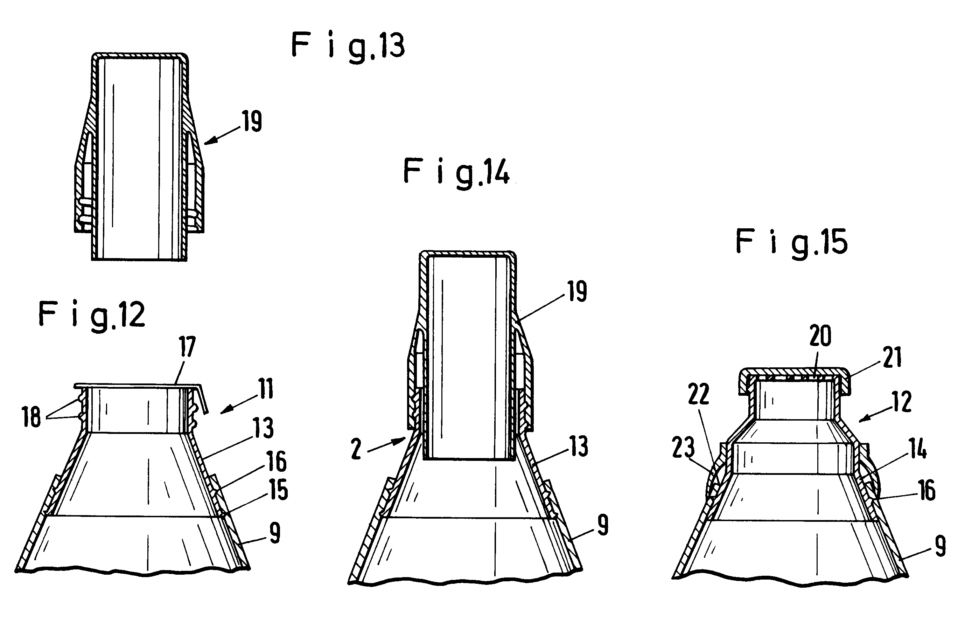

Der Kopfteil 9 des Korpus 1 ist unter Bildung von Falttaschen 9a,9b,9c,9d trichterförmig gestaltet und weist eine zentrale Öffnung 10 auf, in die von unten, wie in Figur 12 bis 15 im Detail dargestellt ist, ein Mundstück 11,12 des Ausgießers 2 eingesetzt ist. Das Mundstück 11,12 weist einen konischen Flansch 13,14 auf, der an der Innenseite des trichterförmigen Kopfteils 9 angesiegelt ist. Zum Zwecke des leichteren Ansiegelns und des dichten Verschließens kann der Flansch 13,14 mit Dichtungs- und Siegellippen 15,16 bestückt sein. Insbesondere ist, wie in Figur 6 dargestellt ist, die Form des Flansches 13 der Form der Falten und Falttaschen 9a,9b,9c,9d aufweisenden Innenseite des trichterförmigen Kopfteils 9 derart angepaßt, daß sich neben der Siegelverbindung zwischen dem Flansch 13 und dem Kopfteil 9 ein Formschluß ergibt.

Das Mundstück 11 gemäß Figur 12 ist durch einen aufgeklebten Laschenverschluß 17 verschlossen. Sofern das Mundstück 11 mit einem hülsenförmigen Ansatz 18 mit Außengewinde entsprechend Figur 12 und 14 bestückt ist, kann er nach Entfernen des Laschenverschlusses 17 oder bei von vornherein fehlendem Laschenverschluß 17 mit der aufschraubbaren Kappe 19 verschlossen werden. Die Kappe 19 kann entsprechend Figur 13 und 14 als Dosierkappe ausgebildet sein.

Das Mundstück gemäß Figur 15 ist als Streueinrichtung mit einer stirnseitigen Lochplatte 20 ausgebildet. Mittels der aufsteckbaren Kappe 21 ist das Mundstück 12 verschließbar. Im Unterschied zu den Ausführungsbeispielen der Figuren 12 bis 14 ist beim Ausführungsbeispiel der Figur 15 der freie Rand 22 des Kopfteils 9 durch einen auf dem Mundstück 12 sitzenden Blendring 23 abgedeckt.

Für die Herstellung des Korpus 1 der Figur 1 wird von einem rechteckigen Zuschnitt gemäß Figur 4 ausgegangen. Über die gesamte Höhe des Zuschnittes erstrecken sich vier Faltlinien 31 bis 34, die im mittleren Abschnitt am Korpus 1 die Seitenkanten bilden. Schraffierte Bereiche 35,36 bilden an den beiden Seitenwänden des Zuschnittes eine Naht, und zwar eine Eckennaht 37, des zunächst zu einem Schlauch geformten Korpus 1. Für den als Faltboden ausgeführten Boden 3 des Korpus 1 verläuft eine Faltlinie 38 über die gesamte Breite des Zuschnittes. Diese Faltlinie 38 bildet am Boden 3 eine umlaufende Stützkante. Eine weitere, sich über die gesamte Breite des Zuschnittes erstreckende Faltlinie 39 begrenzt die Stegnaht 4. Für die Bildung der nach innen umzufaltenden Ohren 5,6 des Bodens 3 sind in zwei am Korpus 1 gegenüberliegenden Bodenfeldern Faltlinien 40,41 angeordnet, die diese Bodenfelder in Dreieckfelder aufteilen.

Der Kopfteil 9 wird durch eine sich über die gesamte Breite erstreckende Faltlinie 43 begrenzt. Von den Schnittpunkten 48 bis 51 der Faltlinien 31 bis 34 und der Faltlinie 43 gehen jeweils mehrere Faltlinien 31' bis 34', 52 bis 67 strahlenförmig aus und verlaufen durch rechteckige Felder 44 bis 47. Die von benachbarten Schnittpunkten 48 bis 51 ausgehenden benachbarten Faltlinien 52,55,56,59,60,63,64,67 treffen in der Nähe der äußeren Schnittkante des Zuschnittes aufeinander, die den Rand 22 der Öffnung 10 des Korpus 1 bildet. Sie können allerdings auch auf der Schnittkante zusammentreffen oder hier einen Abstand voneinander haben. Dies hängt von der Geometrie des Korpus und des Mundstückes ab. Die von den Faltlinien 31' bis 34', 52 bis 67 eingeschlossenen Winkel sind untereinander annähernd gleich.

Bei der plisseeartigen Faltung des Kopfteils 9 werden aus den zwischen den Faltlinien 31,54,55,32,56,57,33,62,63,34, 64,65 liegenden, im wesentlichen dreieckigen Feldern die in Figur 6 dargestellten geschlossenen, das heißt nicht notwendig vollflächig versiegelten Falttaschen 9a,9b,9c,9d gebildet, wobei die verlängerten Abschnitte der Faltlinien 31 bis 34 im Innern des Kopfteils 9 liegen. Im Ergebnis wird damit ein trichterförmiges Kopfteil 9 mit einer zentralen achteckigen Öffnung 10 gebildet, in die der mit seinem Flansch 13 in der Form angepaßte Ausgießer 11 von unten einsetzbar ist. Zumindest am Rand 22 der Öffnung 10 liegen die Felder 35,36 für die Seitennaht 37 nicht im Bereich einer Faltlinie, so daß die Belastung der Seitennaht 37 an dieser kritischen Stelle nicht kritisch ist.

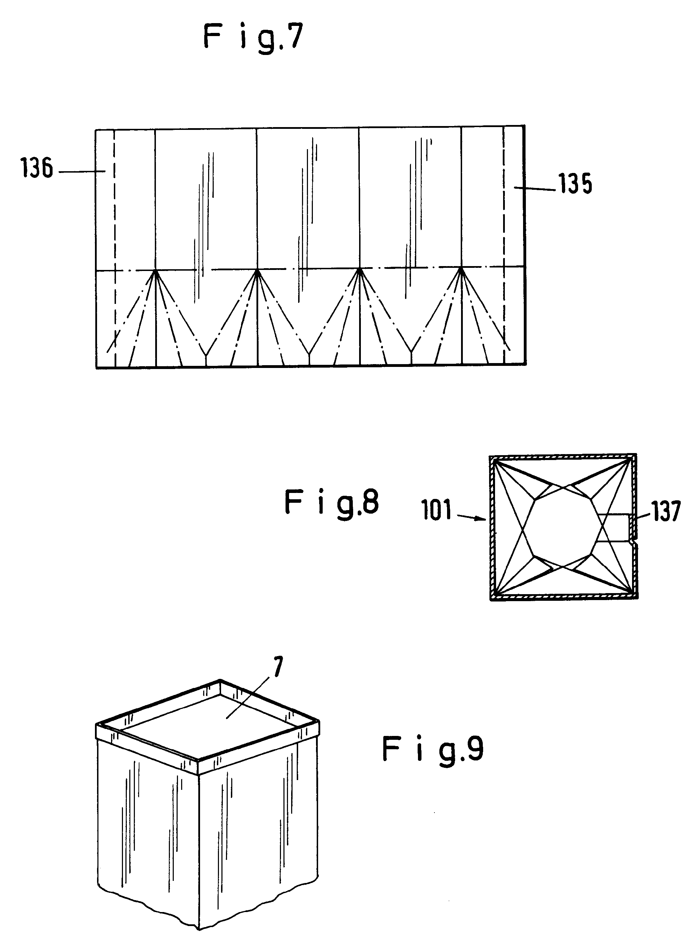

Das Ausführungsbeispiel der Figuren 7 und 9 unterscheidet sich von dem der Figuren 4 bis 6 nur darin, daß der Zuschnitt nicht für einen Faltboden, sondern für einen einsiegelbaren Boden 7 gemäß Figur 9 ausgeführt ist und die Felder 135,136 für die Naht 137 nicht an einer Seitenkante des Korpus 101, sondern in der Mitte zwischen zwei Seitenkanten liegen. Wie beim vorigen Ausführungsbeispiel sind die Verhältnisse auch hier so, daß die Naht 137 an der Schnittkante nicht im Bereich einer stark zu faltenden Faltlinie liegt.

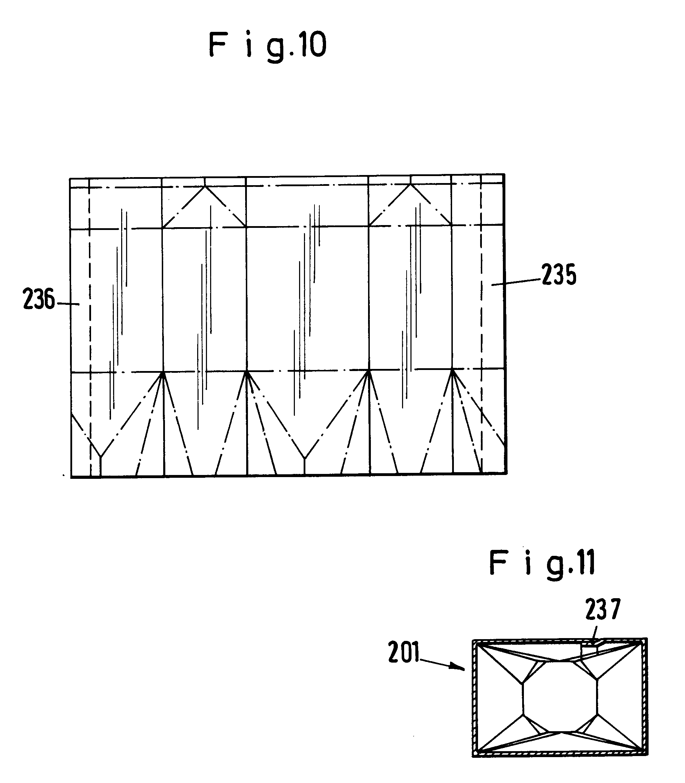

Das Ausführungsbeispiel der Figuren 10 und 11 unterscheidet sich von dem der Figuren 4,5 und 6 nur darin, daß der Zuschnitt nicht für einen im Grundriß quadratischen Behälter, sondern für einen im Grundriß rechteckigen Behälter mit verschieden breiten Seiten ausgelegt ist und die von Feldern 235,236 gebildete Naht 237 von den Seitenkanten des Korpus 201 mit Abstand angeordnet ist. Ein weiterer Unterschied besteht noch darin, daß den Faltlinien 52,59,60,67 des Zuschnittes der Figuren 4 und 7 entsprechende Faltlinien fehlen. Da diese Faltlinien im Unterschied zu den Faltlinien 31' bis 34', 54 bis 57, 62 bis 65 nicht für die Falttaschen benötigt werden, sondern nur die Faltung und/oder die Formung des trichterförmigen Kopfteils erleichtern sollen, wirkt sich deren Fehlen nicht besonders nachteilig aus. Wichtiger sind dagegen die Faltlinien 53,58,61,66, da sie zur Entlastung der äußeren Falttaschen bei der Aufformung des Kopfteils beitragen. Schließlich ist der Zuschnitt nicht für einen Faltboden entsprechend Figur 3, sondern für einen angesiegelten Boden gemäß Figur 4 ausgelegt.

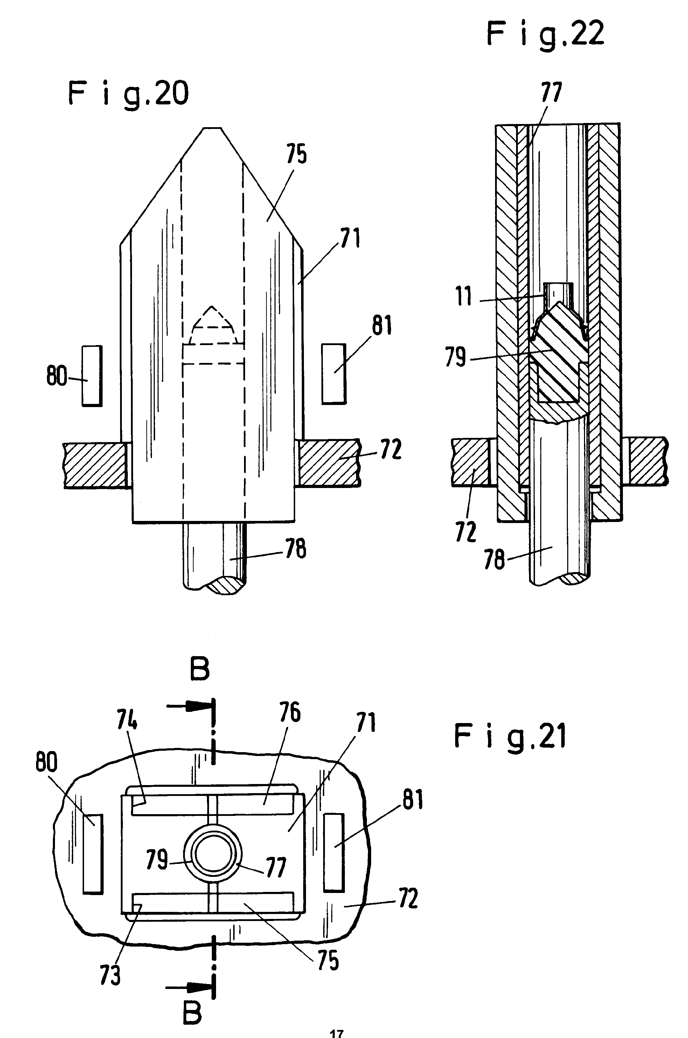

Für die Faltung und Siegelung des Kopfteils 9 und das Einsetzen und Befestigen des Ausgießers 2 dient das in Figur 20 bis 21 dargestellte Werkzeug. Dieses Werkzeug besteht aus einem im Querschnitt rechteckigen Formdorn 71, der auf einer Platte 72 stationär angeordnet ist und an gegenüberliegenden Seiten Ausnehmungen 73,74 aufweist, in denen giebelförmige Formplatten 75,76 längsverschieblich gelagert sind. Der Formdorn 71 weist eine zentrale Ausnehmung 77 auf, in der ein Stempel 78 in Längsrichtung beweglich angeordnet ist. Der Stempel 78 weist einen Formkopf 79 auf, auf dem der Ausgießer 2 in einer vorgegebenen Drehstellung aufsteckbar ist. Den freien Seiten des Formdorns 71 sind Klemmbacken 80,81 zugeordnet.

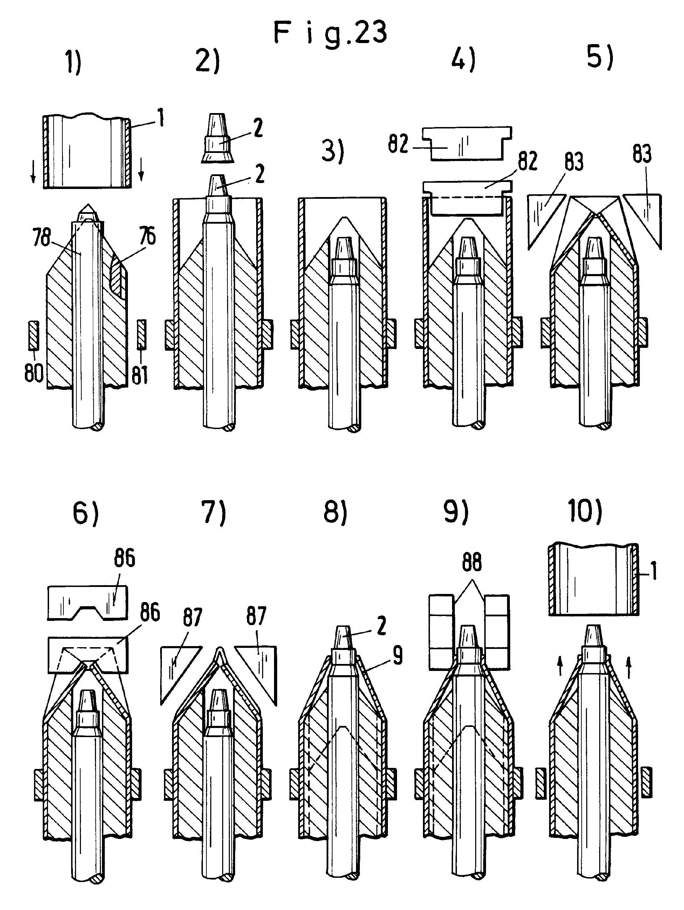

Um entsprechend Figur 23 mit einem solchen Werkzeug den Kopfteil 9 herzustellen, wird bei geöffneten Klemmbacken 80,81 der aus dem Zuschnitt der Figur 4 hergestellte schlauchförmige Korpus 1 auf den Formdorn 71 mit in oberer Stellung befindlichen giebelförmigen Formplatten 75,76 aufgesteckt und durch die Klemmbacken 80,81 festgeklemmt (Figur 23, Arbeitsschritt 1 und 2).

Davor oder danach wird bei hochgefahrenem Stempel 78 das mit der Kappe 19 verschlossene Mundstück 11 auf den Formkopf 79 in der zu den Falttaschen und der Seitennaht passenden Position gesteckt und der Stempel 73 wieder eingefahren (Figur 23, Arbeitsschritt 2 und 3).

Danach werden mittels eines in den schlauchförmigen Korpus 1 einzufahrenden Elementes 82 die heißsiegelfähigen Bereiche der zu bildenden Taschen 9a,9b,9c,9d innenseitig, beispielsweise mit Heißluft, aktiviert (Figur 23, Arbeitsschritt 4).

Mit Faltwerkzeugen 83 werden die zwischen den beiden giebelförmigen Formplatten 75,76 liegenden Felder 44,46 (Fig. 4) dachförmig zusammengefaltet und dabei an den Giebeln aus den zwischen den Faltlinien 31,55,32,56,33,63,34,64 liegenden Feldern einfache Falttaschen 84,85 gebildet und durch Siegelung geschlossen (Figur 17,17a und Figur 23, Arbeitsschritt 5).

Mit Aktivierungselementen 86 werden die Außenseiten der zwischen den Faltlinien 31',54,32',57,33',62,34',65 liegenden Felder der Falttaschen 84,85 und der benachbarten zwischen den Faltlinien 31',53,32',58,33',61,34',65 der dachförmig zusammengefalteten Felder 44,46 für die Heißversiegelung aktiviert (Figur 23, Arbeitsschritt 6).

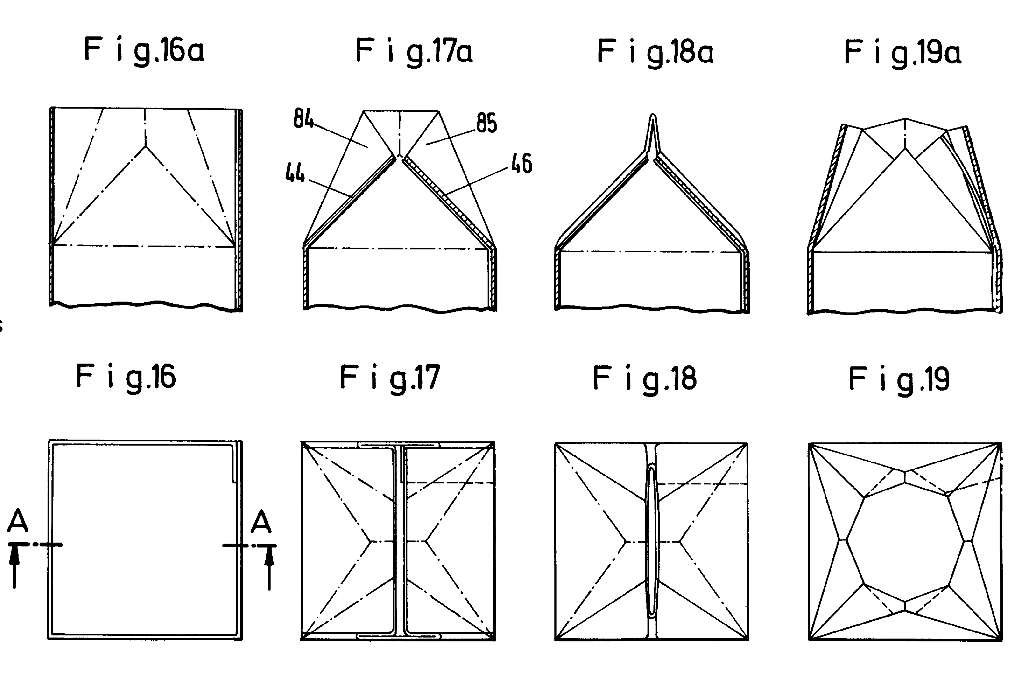

Danach werden mit Faltwerkzeugen 87 die Falttaschen 84,85 über die Giebelformplatten 75,76 umgefaltet und an den dachförmig gefalteten Feldern 44,46 unter Bildung weiterer Falttaschen angeheftet (Figur 18,18a und Figur 23, Arbeitsschritt 7).

Nach Absenken der Giebelformplatten 75,76 wird der Stempel 78 mit dem Ausgießer 2 in den sich dabei trichterförmig mit runder Öffnung 10 formenden Kopfteil 9 eingeführt. Wie bereits erwähnt, ist das Mundstück des Ausgießers 2 der Form und Oberflächenstruktur des Kopfteils 9 mit seinen durch die Falttaschen und die Naht gebildeten Stufen angepaßt und auf dem Kopf 79 so positioniert, daß es unter Formschluß in die Öffnung 10 eingeführt wird (Figur 23, Arbeitsschritt 8).

Mit einem Siegelwerkzeug 88 wird der Rand 22 des Kopfteils 9 auf den insbesondere mit Dichtungs- und Siegellippen 15,16 versehenen Flansch 13 des Ausgießers 11 aufgesiegelt (Figur 23, Arbeitsschritt 9).

Nach Lösen der Klemmbacken 80,81 wird der mit dem Ausgießer 2 bestückte Korpus 1 vom Formdorn 71 abgezogen (Figur 23, Arbeitsschritt 10).

Sofern der Ausgießer 2 nicht bereits entsprechend Figur 12,15 mit einem Verschluß 17,20 versehen ist, wird er mit einem Verschluß versehen und der Behälter vom offenen Boden her gefüllt. Nach Befüllung wird er mit einem Stegnahtverschluß auch am Boden verschlossen. Alternativ kann zuerst der Boden verschlossen werden und der Behälter nach Befüllen über den offenen Ausgießer mit der Kappe verschlossen werden.

## Patentansprüche

1. Behälter für Flüssigkeiten und Schüttgüter in Form einer im wesentlichen quaderförmigen Faltschachtel aus Karton, insbesondere einem Kartonkunststoffmehrschichtverbundmaterial, mit einem unter Bildung von Falttaschen (9a,9b,9c,9d) im Querschnitt verjüngten Kopfteil (9), der die Form eines Trichters mit einer zentralen Öffnung (10) hat, die mit einem ringförmigen Formteil bestückt ist,
**dadurch gekennzeichnet**, daß die bis in den Kopfteil (9) des Behälters reichenden Faltlinien (31-34) der vier parallelen Behälterkanten die im Behälter innenliegenden Falten der jeweils nur an einer Seite dieser Falten anliegenden dreieckigen Falttaschen (9a,9b,9c,9d) bilden, wobei die Faltlinien (54,57,62,65) für die außenliegenden Falten der dreieckigen Falttaschen (9a,9b,9c,9d) paarweise in einem Feld (45,47) des Kopfteils (9) liegen und die beiden Felder (45,47) mit diesen Faltlinien (54,57,62,65) sich im Kopfteil (9) des Behälters gegenüberliegen, und daß das Formteil ein Ausgießer (2) mit einem angeformten Flansch (13,14) oder ein Adapter mit einem angeformten Flansch ist, der von innen an dem trichterförmigen Kopfteil (9) angebracht ist, wobei seine Form der Innenseite des Kopfteils (9) mit den Falttaschen (9a,9b,9c,9d) angepaßt ist.

2. Behälter nach Anspruch 1,
**dadurch gekennzeichnet,** daß der Ausgießer (2) bzw. Adapter mit einem angeformten Flansch (13,14) von innen an dem trichterförmigen Kopfteil (9) angebracht ist, wobei seine Form der Innenseite des Kopfteils (9) mit den Falttaschen (9a,9b,9c,9d) angepaßt ist.

3. Behälter nach Anspruch 1 oder 2,
**dadurch gekennzeichnet**, daß der Ausgießer (2) beziehungsweise der Adapter an das Material des Kartons angesiegelt ist.

4. Behälter nach Anspruch 2,
**dadurch gekennzeichnet**, daß der Flansch (13,14) eine umlaufende Dicht- und/oder Siegellippe (15,16) aufweist.

5. Behälter nach Anspruch 2,
**dadurch gekennzeichnet**, daß der auf der Außenseite des Flansches (14) beziehungsweise Adapters liegende Rand (22) der Öffnung (10) durch einen Blendring (22) abgedeckt ist.

6. Behälter nach einem der Ansprüche 1 bis 5,
**dadurch gekennzeichnet**, daß die Faltschachtel aus einem rechteckigen Zuschnitt besteht, von dessen die Seitenkanten des Korpus (1) bildenden Faltlinien (31-34) mit demselben Ursprungspunkt (48,49,50,51) jeweils drei Faltlinien (31'-34',54,55,56,57,62,63,64,65) strahlenförmig für die Falttaschen (9a,9b,9c,9d) ausgehen.

7. Behälter nach Anspruch 6,
**dadurch gekennzeichnet**, daß die mittlere der drei Faltlinien (31'-34',54,55,56,57,62,63,64, 65) neben der Verlängerung der Faltlinie (31-34) für die Seitenkante des Korpus (1) liegt.

8. Behälter nach Anspruch 7,
**dadurch gekennzeichnet**, daß von demselben Ursprungspunkt (48,49,50,51) jeweils eine weitere Faltlinie (53,59,61,66) ausgeht, die bei geschlossener Falttasche (9a,9b,9c,9d) parallel neben der mittleren Faltlinie (54,57) liegt.

9. Behälter nach Anspruch 6,
**dadurch gekennzeichnet**, daß die von den strahlenförmig verlaufenden Faltlinien (31'-34',52-67) eingeschlossenen Winkel gleich groß sind, wobei die von benachbarten Faltlinien (31-34) für die Seitenkanten des Korpus (1) ausgehenden benachbarten Faltlinien (52,55,56,59,60,63,64,67) in der Nähe des Randes (22) der Öffnung (10) aufeinandertreffen.

10. Behälter nach einem der Ansprüche 6 bis 9,
**dadurch gekennzeichnet**, daß die bei der Fertigung des Korpus (1) aus dem rechteckigen Zuschnitt entstandene Seitennaht (37,137,237) am Rand (22) der Öffnung (10) außerhalb der Faltlinien (31'-34',54,55,56,57,62,63, 64,65) liegt.

11. Behälter nach Anspruch 10,
**dadurch gekennzeichnet**, daß die Seitennaht (37) innerhalb oder außerhalb der Falttaschen (9a,9b,9c,9d) liegt.

12. Verfahren zum Herstellen eines Behälters nach Anspruch 1,
**gekennzeichnet durch** folgende Verfahrensschritte:
1) An einem im Querschnitt rechteckigen, schlauchförmigen Korpus aus Karton werden die Endbereiche von je zwei gegenüberliegenden Feldern unter Bildung von zwei dreieckigen Falttaschen an jedem Giebel giebeldachförmig zusammengefaltet.
2) Die Falttaschen werden auf die beiden die Giebeldachseiten bildenden Felder umgefaltet und daran angeheftet.
3) Ein Ausgießer oder Adapter für einen Ausgießer wird vom Innern des schlauchförmigen Korpus in den von den Feldern der Giebeldachseiten und den Feldern der Giebel gebildeten Kopfteil in den sich dabei trichterförmig formenden Kopfteil eingeführt, teilweise durch dessen Öffnung gesteckt und an dessen Innenseite angesiegelt.
4) Der schlauchförmige Korpus wird an seinem dem Ausgießer abgewandten Ende durch einen über- oder eingesiegelten Boden oder durch eine Stegnaht verschlossen.

13. Vorrichtung zur Durchführung des Verfahrens nach Anspruch 12,
**gekennzeichnet durch** ein Unterwerkzeug aus einem Formdorn (71) und zwei gegenüber dem Formdorn (71) beweglichen, an gegenüberliegenden Außenseiten des Formdorns (71) angeordneten Giebelformplatten (75,76) und einem in den Formdorn (71) axial beweglich angeordneten Stempel (78) für den Ausgießer (11) und durch mehrere Oberwerkzeuge (82,83,85,86,87) in Form von Faltwerkzeugen (83,86) für die Giebeldachfaltung und die Falttaschen (9a,9b,9c,9d) und in Form von Aktivierungs- und Siegelelementen (82,83,85,87) für die Siegelung der Falttaschen (9a,9b,9c,9d) und des Ausgießers (11).

## Claims

1. A container for liquids and bulk materials in the form of a substantially parallelipipedic folding box of cardboard, more particularly a cardboard/plastics multi-layer composite material, having a head portion (9) which tapers in cross-section through the formation of folding pockets (9a, 9b, 9c, 9d) and which has the shape of a funnel having a central opening (10) equipped with an annular shaped member, characterized in that the folding lines (31-34), extending into the head portion (9) of the container, of the four parallel container edges form the folds, lying inside the container, of the triangular folding pockets (9a, 9b, 9c, 9d) each bearing against only one side of said folds, the folding lines (54, 57, 62, 65) for the external folds of the triangular folding pockets (9a, 9b, 9c, 9d) lying in pairs in an area (45, 47) of the head portion (9) and the two areas (45, 47) with said folding lines (54, 57, 62, 65) lying opposite one another in the head portion (9) of the container, and the shaped member is a spout (2) having a shaped-on flange (13, 14) or an adapter having a shaped-on flange, which is disposed from inside on the funnel-shaped head portion (9), the shape of the spout or adapter being adapted to the inside of the head portion (9) with the folding pockets (9a, 9b, 9c, 9d).

2. A container according to claim 1, characterized in that the spout (2) or adapter is disposed with a shaped-on flange (13, 14) from inside on the funnel-shaped head portion (9), the shape of the spout or adapter being adapted to the inside of the head portion (9) with the folding pockets (9a, 9b, 9c, 9d).

3. A container according to claims 1 or 2, characterized in that the spout (2) or adapter is sealed to the material of the cardboard.

4. A container according to claim 2, characterized in that the flange (13, 14) has a circularly extending hermeticizing and/or sealing lip (15, 16).

5. A container according to claim 2, characterized in that the edge (22) of the opening (10) lying on the outside of the flange (14) or adapter is covered by a masking ring (23).

6. A container according to one of claims 1 to 5, characterized in that the folding box consists of a rectangular blank from each of whose folding lines (31-34), forming the lateral edges of the body (1), three folding lines (31'-34', 54, 55, 56, 57, 62, 63, 64, 65) with the same point of origin (48, 49, 50, 51) radiate for the folding pockets (9a, 9b, 9c, 9d).

7. A container according to claim 6, characterized in that the central of the three folding lines (31'-34', 54, 55, 56, 57, 62, 63, 64, 65) lies alongside the prolongation of the folding line (31-34) for the lateral edge of the body (1).

8. A container according to claim 7, characterized in that extending from each of the same points of origin (48, 49, 50, 51) is a further folding line (53, 59, 61, 66), which lies parallel alongside the central folding line (54, 57) when the folding pocket (9a, 9b, 9c, 9d) is closed.

9. A container according to claim 6, characterized in that the angles enclosed by the radiating folding lines (31'-34', 52-67) are of the same size, the adjacent folded lines (52, 55, 56, 59, 60, 63, 64, 67) radiating from adjacent folding lines (31-34) for the lateral edges of the body (1) impinging on one another adjacent the edge (22) of the opening (10).

10. A container according to one of claims 6 to 9, characterized in that the lateral seam (37, 137, 237) produced during the making of the body (1) from the rectangular blank lies at the edge (22) of the opening (10) outside the folding lines (31'-34', 54, 55, 56, 57, 62, 63, 64, 65).

11. A container according to claim 10, characterized in that the lateral seam (37) lies inside or outside the folding pockets (9a, 9b, 9c, 9d).

12. A method of producing a container according to claim 1, characterized by the following method steps:
1) in a tubular cardboard body of rectangular cross-section, the end zones of each pair of opposite areas are folded together gable-roof-shaped, with the formation of two triangular folding pockets at each gable.
2) The folding pockets are folded on to the two areas forming the gable roof sides and stapled thereto.
3) A spout or an adapter for a spout is introduced from the inside of the tubular body into the head portion formed by the areas of the gable roof sides and the areas of the gables and into the funnel-shaped head portion formed as a result, partially inserted through its opening, and sealed to its inside.
4) The tubular body is closed at its end remote from the spout by a sealed-over or sealed-in bottom or by a web seam.

13. An apparatus for the performance of the method according to claim 12, characterized by: a lower tool comprising for the spout (11), a shaping mandrel (71), two gable-shaping plates (75, 76) which can move in relation to the shaping mandrel (71) and are disposed at opposite outer sides thereof, and a punch (78) disposed for axial movement in the shaping mandrel (71); and a number of upper tools (82, 83, 85, 86, 87) in the form of folding tools (83, 86) for the gable roof folding and the folding pockets (9a, 9b, 9c, 9d), and in the form of activating and sealing elements (82, 83, 85, 87) for the sealing of the folding pockets (9a, 9b, 9c, 9d) and the spout (11).

## Revendications

1. Récipient pour liquides et produits en vrac sous forme de boîte pliante essentiellement parallélépipédique en carton, en particulier un matériau stratifié en carton-matière synthétique, avec une partie de tête (9) effilée en section transversale avec formation de poches pliées (9a, 9b, 9c, 9d) et ayant la forme d'un entonnoir avec une ouverture centrale (10) qui est munie d'une pièce de forme annulaire,
caractérisé en ce que les lignes de pliage (31-34) des quatre arêtes parallèles du récipient, allant jusque dans la partie de tête (9) du récipient, forment les plis, se trouvant à l'intérieur dans le récipient, des poches pliées (9a, 9b, 9c, 9d) triangulaires qui sont respectivement adjacentes seulement à un côté de ces plis, les lignes de pliage (54, 57, 62, 65) pour les plis, se trouvant à l'extérieur, des poches pliées (9a, 9b, 9c, 9d) triangulaires se trouvant par paires dans un champ (45, 47) de la partie de tête (9) et les deux champs (45, 47) se trouvant opposés avec ces lignes de pliage (54, 57, 62, 65) dans la partie de tête (9) du récipient, et que la pièce de forme est un verseur (2) avec un flasque conformé (13, 14) ou un adaptateur avec un flasque conformé qui est monté de l'intérieur sur la partie de tête (9) en forme d'entonnoir, sa forme étant adaptée au côté interne de la partie de tête (9) avec les poches pliées (9a, 9b, 9c, 9d).

2. Récipient selon la revendication 1,
caractérisé en ce que le verseur (2) respectivement l'adaptateur est monté de l'intérieur sur la partie de tête (9) en forme d'entonnoir par un flasque conformé (13, 14), sa forme étant adaptée au côté interne de la partie de tête (9) avec les poches pliées (9a, 9b, 9c, 9d).

3. Récipient selon la revendication 1 ou 2,
caractérisé en ce que le verseur (2) respectivement l'adaptateur est scellé au matériau du carton.

4. Récipient selon la revendication 2,
caractérisé en ce que le flasque (13, 14) présente une lèvre d'étanchéité et/ou de scellement (15, 16) continue.

5. Récipient selon la revendication 2,
caractérisé en ce que le bord (22) de l'ouverture (10) adjacent au côté externe du flasque (14) respectivement de l'adaptateur est recouvert par une bague de protection (23).

6. Récipient selon l'une des revendications 1 à 5,
caractérisé en ce que la boîte pliante est constituée d'un flan rectangulaire, des lignes de pliage (31-34), formant les arêtes latérales du corps (1), duquel partent respectivement avec le même point d'origine (48, 49, 50, 51) trois lignes de pliage (31'-34', 54, 55, 56, 57, 62, 63, 64, 65) rayonnantes pour les poches pliées (9a, 9b, 9c, 9d).

7. Récipient selon la revendication 6,
caractérisé en ce que la ligne intermédiaire des trois lignes de pliage (31'-34', 54, 55, 56, 57, 62, 63, 64, 65) se trouve dans le prolongement de la ligne de pliage (31-34) pour l'arête latérale du corps (1).

8. Récipient selon la revendication 7,
caractérisé en ce qu'une autre ligne de pliage (53, 59, 61, 66) part du même point d'origine (48, 49, 50, 51) et se trouve, avec la poche pliée (9a, 9b, 9c, 9d) fermée, parallèle à la ligne de pliage intermédiaire (54, 57).

9. Récipient selon la revendication 6,
caractérisé en ce que les angles inclus par des lignes de pliage (31'-34', 52-67) s'étendant rayonnantes sont égaux, les lignes de pliage (52, 55, 56, 59, 60, 63, 64, 67) adjacentes partant de lignes de pliage (31-34) adjacentes pour les arêtes latérales du corps (1) se rencontrant au voisinage du bord (22) de l'ouverture (10).

10. Récipient selon l'une des revendications 6 à 9,
caractérisé en ce que le joint latéral (37, 137, 237) produit lors de la fabrication du corps (1) à partir du flan rectangulaire se trouve au bord (22) de l'ouverture (10) en dehors des lignes de pliage (31'-34', 54, 55, 56, 57, 62, 63, 64, 65).

11. Récipient selon la revendication 10,
caractérisé en ce que le joint latéral (37) se trouve à l'intérieur ou à l'extérieur des poches pliées (9a, 9b, 9c, 9d).

12. Procédé pour la fabrication d'un récipient selon la revendication 1,
caractérisé par les étapes procédurales suivantes :
1) les zones d'extrémité de chaque fois deux champs opposés sont repliées en forme de pignon de toit à chaque pignon, en formant deux poches pliées triangulaires, sur un corps tubulaire en carton à section transversale rectangulaire,
2) les poches pliées sont repliées sur les deux champs constituant les faces du pignon de toit et y sont fixées,
3) un verseur ou un adaptateur pour un verseur est introduit de l'intérieur du corps tubulaire dans la partie de tête se trouvant alors en forme d'entonnoir formée par les champs des faces du pignon de toit et les champs du pignon, partiellement enfoncé à travers son ouverture et scellé à son côté interne,
4) le corps tubulaire est fermé, à son extrémité écartée du verseur, par un fond fixé dessus ou dedans ou par un joint à nervure.

13. Dispositif pour la mise en oeuvre du procédé selon la revendication 12,
caractérisé par un outil inférieur constitué d'un mandrin de formage (71) et de deux plaques de formage de pignon (75, 76) disposées sur des faces externes opposées du mandrin de formage (71), mobiles par rapport au mandrin de formage (71) et d'un poinçon (78) pour le verseur (11) disposé mobile axialement dans le mandrin de formage (71) et par plusieurs outils supérieurs (82, 83, 85, 86, 87) sous forme d'outils de pliage (83, 86) pour le pliage du pignon de toit et des poches pliées (9a, 9b, 9c, 9d) et sous forme d'éléments d'activation et de scellement (82, 83, 85, 87) pour le scellement des poches pliées (9a, 9b, 9c, 9d) et du verseur (11).
